# EUROPÄISCHE PATENTANMELDUNG

(11) **EP 3 106 490 A1**
(43) Veröffentlichungstag der Anmeldung: **21.12.2016**
(21) Anmeldenummer: 16174623.5
(22) Anmeldetag: 15.06.2016
(51) Int. Cl.: C08J 7/04, B23B 23/00, B32B 27/30, B32B 27/36, B44C 1/17, C09J 7/02

(54) **FOLIE, VERFAHREN ZUM DEKORIEREN EINES GEGENSTANDS UND GEGENSTAND**

(30) Priorität: 17.06.2015 DE 102015109642
(71) Anmelder: Leonhard Kurz Stiftung & Co. KG, 90763 Fürth (DE)
(72) Erfinder: OLSZOWKA, Violetta, 90513 Zirndorf (DE); HOHNHOLZ, Dirk, 90522 Oberasbach (DE); KATSCHOREK, Haymo, 90587 Obermichelbach (DE)
(74) Vertreter: Louis Pöhlau Lohrentz

(57) **Zusammenfassung**

Die Erfindung betrifft eine Folie (1), insbesondere Transferfolie, Heißprägefolie, Laminierfolie, Insert Molding-Folie, In-Mold-Decoration-Folie oder Three-Dimensional-Overlay-Folie, umfassend zumindest eine biologisch abbaubare Schicht. Die Erfindung betrifft ferner ein Verfahren zum Dekorieren eines Gegenstands mit einer solchen Folie (1), die Verwendung der Folie (1) zum Dekorieren von Gegenständen sowie derart dekorierte Gegenstände.

## Beschreibung

Die Erfindung betrifft eine Folie, ein Verfahren zum Dekorieren eines Gegenstands mittels einer solchen Folie sowie einen derart dekorierten Gegenstand und die Verwendung einer solchen Folie zum Dekorieren von Gegenständen.

Dekorfolien finden vielfältig Anwendung zur Dekoration von Gegenständen wie beispielsweise Kunststoffformteilen, Verpackungskartons oder dergleichen. Eine solche Folie umfasst dabei oft eine Trägerlage, bevorzugt aus einem Kunststoff wie PET, sowie meist eine daran insbesondere ablösbare befestigte Dekorlage bzw. Transferlage, die mehrschichtig ausgebildet sein kann, wobei die Trägerlage nach dem Aufbringen der Dekorlage auf den Gegenstand entfernt wird. Die entfernte Trägerlage muss dann aufwändig entsorgt werden, was nicht immer umweltfreundlich möglich ist und beträchtliche Kosten verursacht.

Auch die Dekorlagen einer solchen Folie können Entsorgungsprobleme verursachen. Wird beispielsweise eine Dekorlage aus Kunststoff auf ein Papier oder einen Karton aufgebracht, so kann dies zu Problemen beim Recycling des derart dekorierten Materials führen.

Aufgabe der vorliegenden Erfindung ist es daher, eine Folie, ein Verfahren zum Dekorieren eines Gegenstands mit einer solchen Folie und einen derart dekorierten Gegenstand bereitzustellen, bei denen die genannte Entsorgungsproblematik vermindert ist.

Erfindungsgemäß wird diese Aufgabe durch eine Folie mit den Merkmalen des Anspruchs 1, ein Verfahren mit den Merkmalen des Anspruchs 12, einen Gegenstand mit den Merkmalen des Anspruchs 14 sowie die Verwendung einer solchen Folie nach Anspruch 15 gelöst.

Eine derartige Folie, insbesondere Transferfolie, Heißprägefolie, Laminierfolie, Insert Molding-Folie, In-Mold-Decoration-Folie oder Three-Dimensional-Overlay-Folie (Three-Dimensional-Overlay = TOM), umfasst zumindest eine biologisch abbaubare Schicht.

Mittels eines Verfahrens zum Dekorieren eines Gegenstands, insbesondere eines Kunststoffformkörpers, eines Papiers, eines Kartons oder dergleichen, wird eine derartige Folie unter Temperatureinwirkung auf den Gegenstand übertragen.

Man erhält so einen dekorierten Gegenstand, insbesondere Kunststoffformkörper, Papier, Karton oder dergleichen, mit einer derartigen Folie.

Eine solche Folie kann Verwendung zum Dekorieren eines Kunststoffformteils finden, insbesondere eines Gehäuses für ein Gerät, eines Innenverkleidungsteils für ein Land-, Wasser- oder Luftfahrzeug, eines Bauteils für ein Möbelstück, einen Sportartikel, eines Bekleidungsartikels oder dergleichen.

Ferner kann eine solche Folie zum Dekorieren eines Papier- oder Kartongegenstands, insbesondere einer Verpackung, verwendet werden.

Auch die Verwendung einer derartigen Folie als Sicherheitselement für ein Sicherheitsdokument, insbesondere ein Ausweisdokument, Visadokument, eine Kreditkarte, eine Debitkarte, ein Wertpapier, eine Mautvignette oder dergleichen ist möglich.

Eine solche Folie bzw. ein derart dekorierter Gegenstand ist aufgrund der zumindest teilweisen biologischen Abbaubarkeit besonders umweltfreundlich zu entsorgen. Daher können Entsorgungs- bzw. Recyclingkosten reduziert werden. Gleichzeitig wird die Nachhaltigkeit der Herstellung foliendekorierter Gegenstände deutlich verbessert.

Unter biologischer Abbaubarkeit ist dabei zu verstehen, dass die zumindest eine Schicht mikrobiell, also unter dem Einfluss von Bakterien und Pilzen, insbesondere unter anaeroben oder aeroben Bedingungen (ohne Luft oder mit Luft), zersetzt werden kann, wobei als Rückstände in der Regel lediglich Kohlendioxid, Stickstoff, Methan, Wasser und anorganische Reststoffe, beispielsweise Mineralsalze verbleiben.

Es ist dabei insbesondere bevorzugt, wenn die biologisch abbaubare Schicht kompostierbar ist. Für den Kompostierungsprozess benötigt der Abfall insbesondere die richtige Temperatur und das richtige Maß an Wasser und Sauerstoff. Unter Kompostierbarkeit soll dabei insbesondere verstanden werden, dass die biologisch abbaubare Schicht der harmonisierten Europäischen Norm EN 13432 und/oder der australischen Norm AS4736 und/oder der US-Norm ASTM D6400 und/oder dem ISO-Standard ISO17088:2008 genügt.

Die genannten Normen umfassen eine chemische Prüfung und Offenlegung aller Inhaltsstoffe, wobei jeweilige Grenzwerte für Schwermetalle einzuhalten sind. Ferner ist nachzuweisen, dass mindestens 90% des organischen Materials in 6 Monaten in CO₂ umgewandelt werden (bzw. mindestens 60% nach ASTM D6400). Nach 3 Monaten Kompostierung und anschließender Absiebung durch ein 2 mm-Sieb dürfen nicht mehr als 10% Rückstände bezogen auf die Originalmasse verbleiben. Dabei dürfen keine negativen Auswirkungen auf den Kompostierprozess erfolgen. Abschließend ist eine Untersuchung des Effekts von resultierenden Komposten auf das Pflanzenwachstum (agronomischer Test), sowie ein Ökotoxizitätstest durchzuführen.

Bei Nachweis der entsprechenden Normerfüllung kann eine solche Folie oder ein solche Gegenstand dann problemlos in technischen Kompostieranlagen oder auch im Hauskompost entsorgt werden.

Es ist ferner bevorzugt, wenn die Folie eine Transferfolie mit einer Transferlage und einer von der Transferlage ablösbare Trägerlage ist. Vorteilhaft ist es, wenn die Trägerlage biologisch abbaubar ist.

Eine solche Folie eignet sich beispielsweise als Heißprägefolie, für das Insert Molding, für In-Mold-Decoration oder TOM. Die Trägerlage schützt und stabilisiert dabei die Folie während der Herstellung und Weiterverarbeitung. Durch die Verwendung biologisch abbaubarer Materialien für die Trägerlage kann eine besonders große Menge an Abfall eingespart werden, der ansonsten aufwändig recycelt oder deponiert werden müsste.

Bevorzugt besteht dabei die Trägerlage aus Cellulose, Polybutylenadipat-Terephthalat (BTA-Copolyester), Polylactid (PLA), insbesondere biaxial orientiertem Polylactid (z.B. BOPLA), Polyhydroxybutyrat (PHB), oder einem Gemisch daraus.

Trotz der Bioabbaubarkeit ist die Folie bzw. die Trägerlage besonders widerstandsfähig. Die Folie und insbesondere die Trägerlage sind so ausgebildet, dass sie sich trotz ihrer biologischen Abbaubarkeit bzw. Kompostierbarkeit gut herstellen lassen und einfach zu verarbeiten sind. Ferner kann die Folie über einen langen Zeitraum gelagert werden, ohne dass sie dabei Schäden annimmt. Insbesondere ist die lagernde Folie gegen äußere Einflüsse, wie beispielsweise Temperatur, Feuchtigkeit und CO₂ widerstandsfähig.

Die Folie bzw. die einzelnen Schichten der Folie sind bevorzugt so ausgebildet, dass sie insbesondere ohne das Vorliegen direkter Sonneneinstrahlung und ohne mechanische Druckbelastung von unter den folgenden Bedingungen ohne nennenswerten Schaden gelagert werden können:

| | |
|---|---|
| Maximale Lagerzeit: | 12 Monate |
| Lagertemperaturbereich: | 10°C bis 35°C |
| Relative Luftfeuchte: | 40% bis 60% |

Es ist weiter bevorzugt, wenn die Trägerlage eine Bruchdehnung in Maschinenrichtung und/oder in Transversalrichtung von mindestens 70% aufweist, insbesondere bei einer Temperatur von 25°C. Hierdurch können Folienrisse oder -brüche bei der maschinellen Verarbeitung vermieden werden.

Ferner ist es vorteilhaft, wenn die Trägerlage bei 30-minütiger Behandlung bei etwa 150°C eine Schrumpfung in Maschinenrichtung von weniger als 2% und/oder in Transversalrichtung von weniger als 1% aufweist. Hierdurch wird erreicht, dass die Trägerlage unter den bei den genannten Verarbeitungsverfahren auftretenden Temperaturen ihre Form beibehält und die weiteren Lagen der Folie nicht durch eine Schrumpfung der Trägerlage verformt werden.

Es ist weiter bevorzugt, wenn die Trägerlage eine Bruchkraft in Maschinenrichtung und/oder in Transversalrichtung von mehr als 10 kg/mm² aufweist, insbesondere bei einer Temperatur von 25°C. Dies stellt sicher, dass die Trägerlage den bei der maschinellen Verarbeitung auftretenden Zug- und Scherkräften widerstehen kann.

Ferner ist es vorteilhaft, wenn die Trägerlage einen Schmelzpunkt von mehr als 150°C, insbesondere von mehr als 220°C aufweist. Damit ist sichergestellt, dass die Trägerlage auch bei Verfahren mit hohem Wärmeeintrag, wie beispielsweise dem Insert Molding, stabil bleibt und auch nach der Übertragung der weiteren Schichten auf den zu dekorierenden Gegenstand problemlos ablösbar ist.

Weiter ist es bevorzugt, wenn die Trägerlage eine Schichtdicke von 4 µm bis 200 µm, bevorzugt von 5 µm bis 100 µm aufweist. Bei einer solchen Schichtdicke kann die Trägerlage ihre Schutz- und Stabilisierungsfunktion besonders gut erfüllen.

Es ist weiter bevorzugt, wenn wenigstens die Transferlage der Folie biologisch abbaubar ist. Setzt sich die Transferlage aus mehreren Schichten, die unterschiedlich ausgebildet sein können, zusammen, dann ist es vorteilhaft, wenn jede Schicht biologisch abbaubar ist. Durch eine solche Transferlage wird auch die biologische Abbaubarkeit eines Gegenstandes, auf den die Transferlage übertragen wird, nicht beeinträchtigt. Auf diese Weise können beispielsweise biologisch abbaubare dekorierte Papiere oder Kartons gefertigt werden. Das heißt, dass der dekorierte Gegenstand auch mit der zusätzlich aufgebrachten Dekoration seine vorteilhaften Eigenschaften der biologischen Abbaubarkeit beibehält. Der weitere Vorteil einer bioabbaubaren Transferlage ist darin zu sehen, dass bei lediglich einer Teilübertragung der Transferlage auf einen Gegenstand, also dass auch Bereiche der Transferlage auf der Trägerlage verbleiben, bei dem Vorliegen einer bioabbaubaren Trägerlage, sich die Trägerlage zusammen mit der daran verbleibenden Transferlage umweltfreundlich entsorgt werden lassen. Bei der bioabbaubaren Transferlage kann es sich um wenigstens eine Lackschicht handeln.

Es ist dabei bevorzugt, wenn die Lackschicht aus einem Lack auf Basis eines Polyzuckers (z.B. Zucker, Stärke, Cellulose), Lignin, Schellack, Baumharze (z.B. Kopal, Dammar), Polyvinylpyrrolidon (PVP), Polyalkohole (PVA) gebildet ist. Dies gewährleistet sowohl die biologische Abbaubarkeit als auch die mechanische und thermische Stabilität, die für den Transfer der Lackschicht mit den genannten Verfahren notwendig ist.

Ferner ist es bevorzugt, wenn die Lackschicht zumindest ein natürliches oder naturidentisches Farbmittel umfasst. Damit kann auf anorganische, nicht abbaubare Farbstoffe oder Pigmente verzichtet werden, so dass die biologische Abbaubarkeit der Lackschicht nicht durch die Färbung beeinträchtig wird. Beispielsweise können hierfür Pflanzenextrakte, Carotinoide, Chlorophylle oder dergleichen verwendet werden.

Vorzugsweise weist dabei die Lackschicht eine Schichtdicke von 0,01 µm bis 50 µm, bevorzugt von 0,5 µm bis 10 µm auf.

Es ist weiter vorteilhaft, wenn die Folie zumindest eine biologisch abbaubare Ablöseschicht umfasst. Eine solche Ablöseschicht erleichtert das Ablösen einer Trägerlage von weiteren Schichten der Folie. Durch die Verwendung einer biologisch abbaubaren Ablöseschicht kann sichergestellt werden, dass die biologische Abbaubarkeit der Trägerlage nicht durch Rückstände der Ablöseschicht beeinträchtigt wird.

Es ist dabei bevorzugt, wenn die Ablöseschicht aus einem Wachs, insbesondere Carnaubawachs, Montanwachs, oder aus Methylcellulose gebildet ist. Solche Substanzen stellen die notwendige Zwischenschichthaftung bereit, um einerseits die Trägerlage an den weiteren Schichten der Folie zu halten, andererseits aber eine einfache Ablösung der Trägerlage zu ermöglichen.

Bevorzugt weist dabei die Ablöseschicht eine Schichtdicke von 0,005 µm bis 0,5 µm, bevorzugt von 0,05 µm bis 0,25 µm auf.

Um die Ablösefunktion zu ermöglichen, ist es dabei ferner bevorzugt, wenn die Ablöseschicht zwischen der Trägerlage und zumindest einer weiteren Schicht der Folie, insbesondere der Transferlage angeordnet ist.

Es ist weiter bevorzugt, wenn die Folie bzw. bevorzugt die Transferlage zumindest eine biologisch abbaubare Kleberschicht umfasst.

Die Kleberschicht dient der Verbindung der Folie mit einem zu dekorierenden Gegenstand. Durch die Verwendung biologisch abbaubarer Kleber kann gewährleistet werden, dass die biologische Abbaubarkeit eines derart dekorierten Gegenstands erhalten bleibt.

Dabei ist es bevorzugt, wenn die Kleberschicht aus einem natürlichen Harz (z.B. Baumharze) und/oder aus Schellack gebildet ist.

Solche Substanzen verflüssigen sich oder erweichen bei den üblicherweise bei der Foliendekoration verwendeten Temperaturen und erhärten beim Erkalten wieder, so dass eine feste Verbindung zwischen Folie und Gegenstand erzeugt wird.

Ferner ist es vorteilhaft, wenn die Kleberschicht eine Schichtdicke von 0,1 µm bis 20 µm, bevorzugt von 0,5 µm bis 10 µm aufweist.

Es ist weiter bevorzugt, wenn die Folie, bevorzugt die Transferlage, zumindest eine Reflexionsschicht, insbesondere eine Metallschicht, insbesondere aus Aluminium, umfasst.

Solche Metallschichten sind zwar nicht biologisch abbaubar im engeren Sinne, unter den Bedingungen der Kompostierung oxidieren sie jedoch aufgrund ihres hohen Oberflächen-zu-Volumen-Verhältnisses schnell zu den jeweiligen biologisch inerten Oxiden, so dass sie die Kompostierbarkeit nicht beeinträchtigen.

Bevorzugt weist dabei die Metallschicht eine Schichtdicke von 0,010 µm bis 5 µm, bevorzugt von 0,025 µm bis 0,25 µm auf.

Derart dünne Schichten können beispielsweise durch Bedampfen, Sputtern oder vergleichbare Abscheideverfahren erzeugt werden und haben ein besonders hohes Oberflächen-zu-Volumen-Verhältnis, was die Kompostierbarkeit insbesondere durch Korrosion besonders begünstigt.

Alternativ oder zusätzlich zu einer Reflexionsschicht aus Metall ist es auch möglich, dass die Folie bzw. die Transferlage auch eine nichtmetallische Reflexionsschicht, beispielsweise aus transparenten oder transluzenten Verbindungen wie ZnS umfasst. ZnS beispielsweise zerfällt unter dem Einfluss von Säuren in Oxide und Schwefelverbindungen und ist damit vergleichsweise gut biologisch abbaubar und/oder kompostierbar.

Alternativ oder zusätzlich ist es auch möglich, dass die Folie bzw. die Transferlage eine nichtmetallische Reflexionsschicht aus einem vorzugsweise pigmentierten Lack mit hohem Brechungsindex aufweist. Ein hoher Brechungsindex ist bevorzugt größer als 1,5.

Alternativ oder zusätzlich ist es auch möglich, dass die Folie bzw. die Transferlage eine nichtmetallische Reflexionsschicht aus einer Vielzahl von Lackschichten aufweist, die jeweils alternierend niedrige Brechungsindizes (LRI = Low Refractive Index) und hohe Brechungsindizes (HRI = High Refractive Index) aufweisen. Ein niedriger Brechungsindex ist bevorzugt kleiner als 1,5, ein hoher Brechungsindex ist bevorzugt größer als 1,5. Die Brechungsindizes benachbarter Schichten unterscheiden sich dabei bevorzugt um mindestens 0,2. Mit so einem Multischichtaufbau kann die optische Wirkung eines metallischen Spiegels und/oder auch Farbwechseleffekte erzeugt werden. Beispielsweise kann ein solcher Multischichtaufbau auch Teil der Trägerlage sein. Eine Trägerlage mit einem solchen Multischichtaufbau ist bekannt unter dem Namen Picasus von der Firma Toray, Japan.

Neben den Folien mit biologisch abbaubarer Trägerlage und einer biologisch abbaubaren Transferlage, die mehrere Schichten umfassen kann, ist es auch möglich, eine biologisch abbaubare Trägerlage mit einer nicht biologisch abbaubaren Transferlage aufweisend eine oder mehrere Schichten, zu kombinieren. Dies kann beispielsweise dann sinnvoll sein, wenn die Folie zur Dekoration eines selbst nicht biologisch abbaubaren Gegenstands verwendet werden soll.

In diesem Fall ist es bevorzugt, wenn die Transferlage eine Dekorschicht umfasst.

Diese umfasst vorzugsweise eine Lackschicht, insbesondere aus Acrylat, Melamin, Aziridin, Polyurethan, Polyester, Polycarbonat, Nitrocellulose oder einem Gemisch aus diesen, mit zumindest einem Farbmittel, insbesondere bunte oder unbunte Pigmente und/oder Effektpigmente, welche Effektpigmente insbesondere optisch variable Effekte zeigen, Dünnschichtfilmsysteme, cholesterische Flüssigkristalle, Farbstoffe und/oder metallische oder nichtmetallische Nanopartikel umfasst.

Weiter ist es bevorzugt, wenn die Dekorschicht zumindest eine Replizierschicht, insbesondere aus Polyacrylat, Polyesteracrylat, Polyurethane und deren Copolymere umfasst, in die ein Oberflächenrelief eingebracht ist, welches ein optisch variables Element, insbesondere ein Hologramm, Kinegram® oder Trustseal®, ein vorzugsweise lineares oder gekreuztes sinusförmiges Beugungsgitter, ein lineares oder gekreuztes ein- oder mehrstufiges Rechteckgitter, eine Beugungsstruktur Nullter Ordnung, eine asymmetrische Reliefstruktur, ein Blaze-Gitter, eine vorzugsweise isotrope oder anisotrope, Mattstruktur, oder eine lichtbeugende und/oder lichtbrechende und/oder lichtfokussierende Mikro- oder Nanostruktur, eine binäre oder kontinuierliche Fresnelllinsen, eine binäre oder kontinuierliche Fresnel-Freiformfläche, eine Mikroprismenstruktur oder eine Kombinationsstruktur daraus ausbildet. Durch die beschriebenen Arten von Dekorschichten können vielfältige ansprechende Designs verwirklicht werden, die zudem besonders fälschungs- und manipulationssicher ausgebildet werden können. Es ist grundsätzlich aber auch denkbar, dass die Replizierschicht aus einem biologisch abbaubaren Material besteht, wobei in diese vorteilhafterweise ein Oberflächenrelief eingebracht ist, welches ein optisch variables Element der oben genannten Art aufweist.

Es ist bevorzugt, wenn das Übertragen der Folie bzw. der Transferlage durch Heißprägen, Laminieren, Insert Molding, In-Mold-Decoration oder die Three-Dimensional-Overlay-Methode erfolgt.

Beim Heißprägen wird eine Übertragungslage einer Folie durch einen erhitzten Prägestempel auf das Substrat übertragen und anschließend eine Trägerlage der Folie abgezogen.

Bei der In-Mold-Decoration erfolgt die Übertragung der Folie während des Spritzgießens eines Kunststoffformkörpers direkt im Spritzgusswerkzeug. Dies ist auch beim Insert Molding der Fall. Dort wird die Folie jedoch noch vor dem Einlegen in das Spritzgusswerkzeug thermisch vorgeformt, so dass auch besonders komplexe Oberflächen dekoriert werden können.

Beim TOM-Verfahren erfolgt die Übertragung der Folie auf einen Kunststoffformkörper dagegen nach dem Spritzgießen und Entformen unter Einfluss von Vakuum und Wärme. Dies ist ein besonders schonendes Verfahren, so dass auch empfindlichere Folien verarbeitet werden können, die den Temperatur- und Druckbedingungen des Spritzgießens nicht widerstehen könnten.

Es ist dabei bevorzugt, wenn das Heißprägen bei einer Prägetemperatur von 60°C bis 200°C, bevorzugt von 90°C bis 150°C erfolgt.

Ferner erfolgt das Heißprägen zweckmäßigerweise bei einem Prägedruck von 5 N/cm² bis 250 N/cm², bevorzugt von10 N/cm² bis 50 N/cm²

Weiterhin ist es bevorzugt, wenn die Three-Dimensional-Overlay-Methode bei einer Temperatur von 40°C bis 280°C, bevorzugt von 70°C bis 150°C erfolgt.

Die Erfindung wird nun anhand von Ausführungsbeispielen näher erläutert. Es zeigen
- Fig. 1: Eine schematische Schnittdarstellung durch ein Ausführungsbeispiel einer als Heißprägefolie gestalteten Folie;
- Fig. 2: Eine schematische Schnittdarstellung durch ein Ausführungsbeispiel einer als Heißprägefolie mit einer Metallisierung gestalteten Folie;
- Fig. 3: Eine schematische Schnittdarstellung durch ein Ausführungsbeispiel einer als IMD-Folie gestalteten Folie;
- Fig. 4: Eine schematische Schnittdarstellung durch ein Ausführungsbeispiel einer als Three-Dimensional-Overlay-Folie gestalteten Folie.

Eine als Heißprägefolie ausgeführte Folie nach Anspruch 1 umfasst eine Trägerlage 11, eine Ablöseschicht 12, eine Lackschicht 13 und einer Kleberschicht 14.

Bevorzugt ist die Trägerlage 11 biologisch abbaubar, insbesondere kompostierbar und besteht beispielsweise aus Cellulose, Polybutylenadipat-Terephthalat (BTA-Copolyester), Polylactid (PLA), insbesondere biaxial orientiertem Polylactid (z.B. BOPLA), Polyhydroxybutyrat (PHB), oder einem Gemisch daraus.

Die genannten Materialien sind beim Heißprägen thermisch und mechanisch stabil und genügen gleichzeitig den Anforderungen an die Kompostierbarkeit, so dass die nach dem Heißprägen entfernten Reste der Trägerlage 11 kostengünstig und umweltfreundlich durch Kompostierung entsorgt werden können.

Es ist bevorzugt, wenn die Trägerlage 11 eine Bruchdehnung in Maschinenrichtung und/oder in Transversalrichtung von mindestens 70%, sowie eine Bruchkraft in Maschinenrichtung und/oder in Transversalrichtung von mehr als 10 kg/mm² aufweist, insbesondere bei einer Temperatur von 25°C. Hierdurch können Folienrisse oder -brüche bei der maschinellen Verarbeitung vermieden werden.

Ferner ist es vorteilhaft, wenn die Trägerlage 11 bei 30-minütiger Behandlung bei 150°C eine Schrumpfung in Maschinenrichtung von weniger als 2% und/oder in Transversalrichtung von weniger als 1% aufweist. Der Schmelzpunkt der Trägerlage 11 beträgt bevorzugt mehr als 150°C, insbesondere mehr als 220°C. Hierdurch wird gewährleistet, dass die Trägerlage 11 unter den bei den genannten Verarbeitungsverfahren auftretenden Temperaturen ihre Form beibehält und die weiteren Lagen der Folie 1 nicht durch eine Schrumpfung der Trägerlage 11 verformt werden.

Weiter ist es bevorzugt, wenn die Trägerlage eine Schichtdicke von 4 µm bis 200 µm, bevorzugt von 5 µm bis 100 µm aufweist.

Zum Heißprägen muss die Trägerlage 11 eine Reihe von Anforderungen erfüllen: Zunächst muss die Formstabilität der Trägerlage 11 im Herstellungs- und Weiterverarbeitungsprozess soll gewährleistet sein. Ferner sollte die Trägerlage 11 glatt und lackierbar sein und eine Temperaturbeständigkeit bis 160°C aufweisen.

Bezüglich der mechanischen Eigenschaften der Trägerlage 11 sind insbesondere Reißfestigkeit, Zugfestigkeit und Dehnfestigkeit von Bedeutung.

Faltenbildung während des Prägens sollte nicht auftreten. Die Trägerlage 11 muss ferner schneidbar sein und sollte nicht abschleifen. Auch sollte die Trägerlage 11 nicht gepudert sein.

Darüber hinaus muss die Trägerlage 11 zur Optik des (End-)Produktes passen und eine gute Lagerfähigkeit und Weiterverarbeitbarkeit aufweisen. Insbesondere darf die Trägerlage 11 nicht mit dem Prägestempel verkleben.

Ferner sollte die Trägerlage 11 nicht zu glatt sein, da die Folie 1 sonst nicht wickelbar ist. Auch darf sich die Trägerlage 11 nicht unkontrolliert elektrostatisch aufladen.

Die Trägerlage 11 sollte ferner definierte Oberflächeneigenschaften hinsichtlich Rauhigkeit und Oberflächenspannung aufweisen und nicht mit Rückständen beladen sein. Hinsichtlich der Oberfläche sollte die Trägerlage 11 keine Kratzer oder ähnliche Oberflächendefekte aufweisen. Füllmaterialien sollen in der Trägerlage 11 gut dispergiert sein und keine Stippigkeit aufweisen.

Trägerlagen 11 aus den oben angeführten Substanzen erfüllen diese Bedingungen.

Die in den Figuren dargestellten weiteren Schichten 12-14 der Folie bilden insbesondere die Transferlage, die wenigstens teilweise auf das Substrat übertragen wird und dort verbleibt. Die einzelnen Schichten der Transferlage können dabei ebenfalls biologisch abbaubar sein oder auch aus konventionellen, nicht biologisch abbaubaren Materialien bestehen.

Die Ablöseschicht 12 erleichtert das Ablösen der Trägerlage 11 von weiteren Schichten der Folie 1. Durch die Verwendung einer biologisch abbaubaren Ablöseschicht 12 kann sichergestellt werden, dass die biologische Abbaubarkeit der Trägerlage 11 nicht durch Rückstände der Ablöseschicht 12 beeinträchtigt wird.

Es ist dabei bevorzugt, wenn die Ablöseschicht 12 aus einem Wachs, insbesondere Carnaubawachs, Montanwachs, oder aus Methylcellulose gebildet ist.

Solche Substanzen sind biologisch abbaubar und stellen die notwendige Zwischenschichthaftung bereit, um einerseits die Trägerlage 11 an den weiteren Schichten der Folie 1 zu halten, andererseits aber eine einfache Ablösung der Trägerlage 11 zu ermöglichen.

Alternativ können auch nicht biologisch abbaubare Ablöseschichten 12, beispielsweise auf der Grundlage von Silikonen, verwendet werden.

Bevorzugt weist die Ablöseschicht 12 eine Schichtdicke von 0,005 µm bis 0,5 µm, bevorzugt von 0,05 µm bis 0,25 µm auf.

Auch die Lackschicht 13 kann biologisch abbaubar sein. Durch eine solche Lackschicht 13 wird auch die biologische Abbaubarkeit eines Gegenstandes, auf den die Lackschicht 13 übertragen wird, nicht beeinträchtigt. Auf diese Weise können beispielsweise biologisch abbaubare dekorierte Papiere oder Kartons gefertigt werden.

Es ist dabei bevorzugt, wenn die Lackschicht 13 aus einem Lack auf Basis eines Polyzuckers (z.B. Zucker, Stärke, Cellulose), Lignin, Schellack, Baumharze (z.B. Kopal, Dammar), Polyvinylpyrrolidon (PVP), Polyalkohole (PVA) gebildet ist. Dies gewährleistet sowohl die biologische Abbaubarkeit als auch die mechanische und thermische Stabilität, die für den Transfer der Lackschicht 13 mit den genannten Verfahren notwendig ist.

Ferner ist es bevorzugt, wenn die Lackschicht 13 zumindest ein natürliches oder naturidentisches Farbmittel umfasst. Damit kann auf anorganische, nicht abbaubare Farbstoffe oder Pigmente verzichtet werden, so dass die biologische Abbaubarkeit der Lackschicht 13 nicht durch die Färbung beeinträchtig wird. Beispielsweise können hierfür Pflanzenextrakte, Carotinoide, Chlorophylle oder dergleichen verwendet werden.

Auch hier ist es jedoch möglich, nicht biologisch abbaubare Lackschichten 13 zu verwenden. Diese bestehen insbesondere aus Acrylat, Melamin, Aziridin, Polyurethan, Polyester, Polycarbonat, Nitrocellulose oder einem Gemisch aus diesen, und umfassen zumindest ein Farbmittel, insbesondere bunte oder unbunte Pigmente und/oder Effektpigmente, Dünnschichtfilmsysteme, cholesterische Flüssigkristalle, Farbstoffe und/oder metallische oder nichtmetallische Nanopartikel.

Vorzugsweise weist die Lackschicht 13 eine Schichtdicke von 0,01 µm bis 50 µm, bevorzugt von 0,5 µm bis 10 µm auf.

Die Kleberschicht 14 dient der Verbindung der Folie 1 mit einem zu dekorierenden Gegenstand. Durch die Verwendung biologisch abbaubarer Kleber kann gewährleistet werden, dass die biologische Abbaubarkeit eines derart dekorierten Gegenstands erhalten bleibt.

Dabei ist es bevorzugt, wenn die Kleberschicht 14 aus einem natürlichen Harz (z.B. Baumharze) und/oder aus Schellack gebildet ist, um die biologische Abbaubarkeit zu gewährleisten. Solche Substanzen verflüssigen sich oder erweichen bei den üblicherweise bei der Foliendekoration verwendeten Temperaturen und erhärten beim Erkalten wieder, so dass eine feste Verbindung zwischen Folie 1 und Gegenstand erzeugt wird.

Auch hier können nicht biologisch abbaubare Kleber eingesetzt werden, beispielsweise auf der Basis von Acrylaten oder dergleichen.

Es ist dabei vorteilhaft, wenn die Kleberschicht 14 eine Schichtdicke von 0,1 µm bis 10 µm, bevorzugt von 0,5 µm bis 10 µm aufweist.

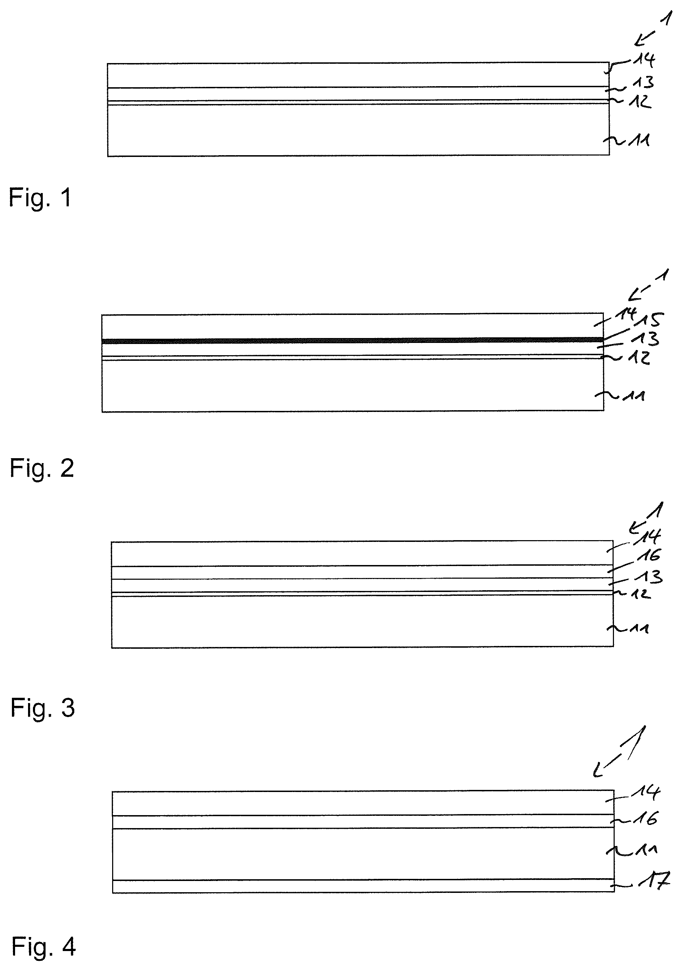

Die Ausführungsform einer Heißprägefolie nach Fig. 2 unterscheidet sich hiervon lediglich dadurch, dass eine zusätzliche Metallschicht 15, vorzugsweise aus Aluminium, vorgesehen ist. Solche Metallschichten 15 sind zwar nicht biologisch abbaubar im engeren Sinne, unter den Bedingungen der Kompostierung oxidieren sie jedoch aufgrund ihres hohen Oberflächen-zu-Volumen-Verhältnisses schnell zu den jeweiligen biologisch inerten Oxiden, so dass sie die Kompostierbarkeit nicht beeinträchtigen.

Bevorzugt weist die Metallschicht 15 eine Schichtdicke von 0,01 µm bis 5 µm, bevorzugt von 0,025 µm bis 0,25 µm auf. Derart dünne Schichten können beispielsweise durch Bedampfen, Sputtern oder vergleichbare Abscheideverfahren erzeugt werden und haben ein besonders hohes Oberflächen-zu-Volumen-Verhältnis, was die Kompostierbarkeit insbesondere durch Korrosion besonders begünstigt.

Für solche Heißprägefolien 1 wurden mehrere Vergleichsversuche durchgeführt. Hierbei wurden folgende Geräte / Bedingungen verwendet:
- Aufstriche mit Spiralrakel
- Prägung mit Hubprägemaschine PE 500 und Gummiformstempel
- Prägetemperatur 150°C (100°C bis 200°C), Prägedauer 0,5s (0,2s bis 1 s) ; Prägedruck 1 bar (1 bis 5 bar).

Der Folienaufbau und die Prägebedingungen wurden analog zu etablierten Werten gewählt.

In einem ersten Versuch erfolgte das Prägen auf das Material Iconorex (Bilderdruckkarton 280 g/m², gestrichene Oberfläche), welches Anwendung in der grafischen Industrie findet. Hierbei wurde folgender Folienaufbau verwendet:
1. Trägerlage 11 aus Cellulose
2. Ablöseschicht 12 aus einer wässrigen Wachsemulsion (0,3% Festkörper; Spiralrakel mit AG (AG = Auftragsgewicht) nass 4,8 g/m²)
3. Lackschicht 13 aus Farblack auf Basis von Acrylat und Nitrocellulose (Festkörper 30%; AG: trocken 1,0 g/m²)
4. Kleberschicht 14 aus einer für Papier geeigneten Formulierung (Mischung verschiedener Acrylate, 20% Festkörper; AG: 3,2 g/m²)

Das Lackpaket ließ sich dabei auf das Papiermaterial Iconorex bei ca. 0,5s und 150°C abprägen. Die Folie 1 verhielt sich analog zu einer typischen graphischen Prägefolie, hier analog zu einer farbigen lasierenden Heißprägefolie. Die Trägerlage aus Cellulose verhält sich vergleichbar zu dem typisch verwendeten Polyestermaterial.

In einem zweiten Prägeversuch erfolgte das Prägen auf das Material Iconorex (Papier) mit einer zusätzlichen Metallschicht 15 aus Aluminium in der Folie 1 mit folgendem Schichtaufbau:
1. Trägerlage 11 aus Cellulose
2. Ablöseschicht 12 aus wässriger Wachsemulsion (AG nass 4,8 g/m²)
3. Lackschicht 13 aus Farblack auf Basis von Acrylat, Nitrocellulose und eines grünen Farbstoffs (AG: trocken 1,0 g/m²)
4. Metallschicht 15 aufgetragen durch Aluminiumbedampfung mit 60 nm.
5. Kleberschicht 16 aus einer für Papier geeigneten Formulierung (AG: trocken 2 g/m²)

Die Folie 1 ließ sich auf das Papiermaterial Iconorex bei ca. 0,5s und 150°C abprägen. Auch hier verhielt sich die Folie 1 analog zu einer typischen graphischen Prägefolie, hier analog einer grünen metallisierten Heißprägefolie. Die Trägerlage 11 aus Cellulose verhielt sich vergleichbar zu dem typisch verwendeten Polyestermaterial.

In einem dritten Prägeversuch erfolgte das Prägen auf das Material PVC. Hierzu wurde folgender Schichtaufbau verwendet:
1. Trägerlage 11 aus Cellulose
2. Ablöseschicht 12 aus Montanwachs (0,3% Festkörper, AG nass ca. 4,5 g/m²) und wässriger Lösung einer Methylcellulose (0,2% Festkörper, AG nass ca. 5,6 g/m²)
3. Lackschicht 13 aus Farblack auf Basis von Acrylat, Nitrocellulose und eines grünen Farbstoffs (AG: trocken ca. 1,0 g/m²)
4. Kleberschicht 14 aus einer für PVC geeigneten Klebstoffformulierung auf Basis von Acrylat und Vinylchlorid (AG: trocken ca. 0,8 g/m²)

Die Folie 1 ließ sich bei ca. 0,5s und 150°C auf das PVC abprägen. Auch hier verhält sich die Folie 1 analog zu einer typischen graphischen Prägefolie für Kunststoffanwendungen, hier analog einer farbigen lasierenden Heißprägefolie. Der Träger 11 aus Cellulose verhielt sich vergleichbar zu dem typisch verwendeten Polyesterträger.

In einem vierten Prägeversuch erfolgte das Prägen auf das Material PVC mit einer zusätzlichen Metallschicht 15 in der Folie 1:
1. Trägerlage 11 aus Cellulose
2. Ablöseschicht 12 aus Montanwachs (AG nass ca. 4,5 g/m²) und wässriger Lösung einer Methylcellulose (AG nass ca. 5,6 g/m²)
3. Lackschicht 13 aus Farblack auf Basis von Acrylat, Nitrocellulose und eines grünen Farbstoffs (AG: trocken 1,0 g/m²)
4. Metallschicht 15 aus Aluminium, erzeugt durch Bedampfung für 60 nm
5. Kleberschicht 14 aus einer für PVC geeigneten Klebstoffformulierung auf Basis von Acrylat und Vinylchlorid (AG: trocken ca. 0,8 g/m²)

Auch hier ließ sich das Lackpaket bei ca. 0,5s und 150°C auf das PVC abprägen und verhielt sich analog zu einer typischen graphischen Prägefolie für Kunststoffanwendungen, hier analog einer farbigen metallisierten Heißprägefolie. Die Trägerlage 11 aus Cellulose verhielt sich vergleichbar zu dem typisch verwendeten Polyesterträger.

Für Trägerlagen 11 aus Cellulose wurden ferner Schrumpfmessungen durchgeführt. Das Material wird für 20 min. bei 150°C in den Trockenschrank gelegt und die Längenabweichung des Materials in Quer- und Längsrichtung gemessen. Damit ergibt sich für Trägerlagen aus Cellulose eine Schrumpfung in Folienlängsrichtung von 2,9% und quer zur Folienrichtung von 5,1%.

Weiterhin wurde das Elastizitätsmodul bei den Temperaturen 25°C und 50°C sowohl in Quer- als auch Längsrichtung für Trägerlagen aus Cellulose (Natureflex 42NP) der Dicke 42 µm als auch für konventionelle PET-Träger der Dicke 50 µm gemessen.

Der Betrag des Elastizitätsmoduls ist umso größer, je mehr Widerstand ein Material seiner elastischen Verformung entgegensetzt. Ein Bauteil aus einem Material mit hohem Elastizitätsmodul ist also umso steifer als ein Bauteil gleicher Konstruktion, welches aus einem Material mit niedrigem Elastizitätsmodul besteht.

Es zeigt sich, dass sich Trägerlagen 11 aus Cellulose sich sowohl in Längsauch als Querrichtung mehr verformen als ein typischer PET-Träger. Dieser Effekt ist in Querrichtung stärker als in Längsrichtung. Bei höheren Temperaturen ist das Elastizitätsmodul des Trägers Natureflex 42NP höher als bei niedrigeren Temperaturen.

Diese Werte sind vergleichbar oder etwas schlechter als bei etablierten Polyesterträgern, stellen aber bezüglich Prozessierbarkeit und Verarbeitbarkeit keine maßgeblichen Einschränkungen dar.

Die Ergebnisse der Zugversuche sind in folgender Tabelle zusammengefasst:

| **Trägermaterial** | **Temperatur [°C]** | **Elastizitätsmodul [MPa]** | **Ausrichtung der Zugmessung** |
|---|---|---|---|
| PET Lumirror 57.01 | 25 | 3950 | längs |
| Skyrol SH | 25 | 4130 | längs |
| Natureflex 42NP | 25 | 2990 | längs |
| PET Lumirror 57.01 | 25 | 4850 | quer |
| Skyrol SH | 25 | 4630 | quer |
| Natureflex 42NP | 25 | 1710 | quer |

| **Trägermaterial** | **Temperatur [°C]** | **Elastizitätsmodul [MPa]** | **Ausrichtung der Zugmessung** |
|---|---|---|---|
| PET Lumirror 57.01 | 50 | 4070 | längs |
| Skyrol SH | 50 | 4150 | längs |
| Natureflex 42NP | 50 | 3590 | längs |
| PET Lumirror 57.01 | 50 | 4570 | quer |
| Skyrol SH | 50 | 4600 | quer |
| Natureflex 42NP | 50 | 1900 | quer |

Fig. 3 zeigt einen schematischen Querschnitt durch eine In-Mold-Decoration-Folie 1. Bei der In-Mold-Decoration erfolgt die Übertragung der Folie 1 während des Spritzgießens eines Kunststoffformkörpers direkt im Spritzgusswerkzeug.

Die gezeigte Folie 1 entspricht im Wesentlichen den in Fig. 1 und 2 gezeigten Heißprägefolien. Neben der Lackschicht 12 ist hier noch eine weitere Dekorschicht 16 vorgesehen. Diese übernimmt die eigentliche Dekorfunktion, so dass die Lackschicht 12 als Klarlackschicht ausgebildet sein kann und eine reine Schutzfunktion, beispielsweise zur Erhöhung der Kratzfestigkeit, übernehmen kann.

Sowohl die Lackschicht 12 als auch die Dekorschicht 16 können dabei die Zusammensetzung und Eigenschaften aufweisen, wie sie bereits anhand der Lackschicht 12 in den Heißprägefolien nach Fig. 1 und 2 beschrieben wurden.

Die Dekorschicht 16 kann ferner eine Replizierschicht, insbesondere aus Polyacrylate, Polyesteracrylat, Polyurethane und deren Copolymere umfassen, in die ein Oberflächenrelief eingebracht ist, welches ein optisch variables Element, insbesondere ein Hologramm, Kinegram® oder Trustseal®, ein vorzugsweise lineares oder gekreuztes sinusförmiges Beugungsgitter, ein lineares oder gekreuztes ein- oder mehrstufiges Rechteckgitter, eine Beugungsstruktur Nullter Ordnung, eine asymmetrische Reliefstruktur, ein Blaze-Gitter, eine vorzugsweise isotrope oder anisotrope, Mattstruktur, oder eine lichtbeugende und/oder lichtbrechende und/oder lichtfokussierende Mikro- oder Nanostruktur, eine binäre oder kontinuierliche Fresnelllinsen, eine binäre oder kontinuierliche Fresnel-Freiformfläche, eine Mikroprismenstruktur oder eine Kombinationsstruktur daraus ausbildet.

Die Dekorschicht 16 kann dabei auch mehrlagig sein und eine Kombination aus Lackschichten, Replizierschichten, Metallschichten und dergleichen umfassen. Die Verwendung einer solchen Dekorschicht 16 beschränkt sich dabei nicht auf die gezeigte IMD-Folie 1. Derartige Dekorschichten 16 können auch in Folien für alle anderen hier geschilderten Transferverfahren integriert werden.

Zusätzlich zu den bereits anhand der Heißprägefolien nach Fig. 1 und 2 erläuterten Eigenschaften sollte die Trägerlage 11 für IMD- und Insert-Molding-Prozesse je nach Anwendung eine gut Verformbarkeit und eine exzellente Bruchdehnung haben. Bezüglich dieser mechanischen Eigenschaften sind PLA (Polylactat)- oder PHB(Polyhydroxybutyrat)-basierte biologisch abbaubare Trägerlagen 11 für IMD- und Insertprozesse besser einsetzbar als Cellulose-Träger, da diese mechanisch ähnlicher zu den bislang verwendeten, nicht biologisch abbaubaren Trägerlagen aus PET sind.

Die Anforderungen an eine Trägerlage 11 für IMD und Insert Molding bezüglich Bruchdehnung in Maschinenrichtung (MD) und Transversalrichtung (TD), sowie die entsprechenden Schrumpfungsanforderungen bei 30min und 150°C, sowie die entsprechenden Werte für Trägerlagen 11 aus BOPLA und Cellulose sind in der folgenden Tabelle zusammengefasst:

| Anforderungskriterium | IMD | Insert Molding | BOPLA | Cellulose |
|---|---|---|---|---|
| Bruchdehnung [%] | | | | |
| MD,TD [ASTM D 882] | Min. 100 | Min.100 | MD 190, TD 90 | MD 22, TD 70 |
| Schrumpf [%] 30min@150°C ASTM D 1204 | | | | |
| MD | 2 | 2 | | 2,9 |
| TD | 1 | 1 | - | 5,1 |

Fig. 4 zeigt einen schematischen Querschnitt durch eine Folie 1 für den TOM-Prozess (Three-Dimensional Overlay Method). Im Gegensatz zum Insert-Molding oder IMD wird hier die Folie 1 erst nach dem Spritzgießen auf eine beliebig geformte Oberfläche eines Kunststoffformkörpers appliziert. Die Folie 1 wird dabei durch Vakuumapplikation auf der Oberfläche fixiert und durch Wärmeeinwirkung übertragen. Gegebenenfalls kann hier auch wie beim Insert Molding eine vorherige Umformung der Folie 1 durch Tiefziehen erfolgen, um die Folie 1 an die Oberflächengeometrie des zu dekorierenden Gegenstands anzupassen. Die eingesetzte Temperatur der Umformung im TOM-Prozess liegt bei 70°C bis 150°C.

Die Folie 1 weist hier eine Trägerlage 11, eine Dekorschicht 16 und eine Kleberschicht 14 auf, die den bereits anhand der Heißpräge- und IMD-Folien erläuterten Aufbau besitzen. Zusätzlich ist eine Deckschicht 17 vorgesehen, die auf der der Dekorlage 16 abgewandten Seite der Trägerlage 11 angeordnet ist. Die Trägerlage 11 verbleibt hier also nach der Übertragung der Folie 1 im Schichtverbund, so dass die Deckschicht 17 eine schützende Außenschicht des dekorierten Gegenstands bildet.

Die Deckschicht 17 sollte eine hohe Glasumwandlungstemperatur und eine niedrige Schmelzviskosität haben. Als Beispiele für eine Deckschicht 17 können ein UV-Polyurethane, Urethan(meth)acrylate, Polyester(meth)acrylate fungieren. Diese sind nicht biologisch abbaubar. Als biologisch abbaubare Materialien für die Deckschicht können gehärtete Öle und Fette verwendet werden, wie z.B. Leinöl, Rapsöl, Bienenwachs verwendet werden.

Da die Trägerlage 11 hier im Folienpaket verbleibt, eignen sich grundsätzlich sowohl bioabbaubare Cellulose als auch BTA-Copolyester (Polybutylenadipat-Terephthalat) oder auch ein BoPLA-Träger (biaxial orientiertes Polylactid).

### Bezugszeichenliste

- 1: Folie
- 11: Trägerlage
- 12: Ablöseschicht
- 13: Lackschicht
- 14: Kleberschicht
- 15: Metallschicht
- 16: Dekorschicht
- 17: Deckschicht

## Patentansprüche

1. Folie (1), insbesondere Transferfolie, Heißprägefolie, Laminierfolie, Insert Molding-Folie, In-Mold-Decoration-Folie oder Three-Dimensional-Overlay-Folie, umfassend zumindest eine biologisch abbaubare Schicht.

2. Folie (1) nach Anspruch 1,
**dadurch gekennzeichnet,**
**dass** die biologisch abbaubare Schicht kompostierbar ist.

3. Folie (1) nach Anspruch 2,
**dadurch gekennzeichnet,**
**dass** die Folie eine Transferfolie mit einer Transferlage und einer von der Transferlage ablösbare Trägerlage (11) ist, wobei die Trägerlage (11) biologisch abbaubar ist und die Trägerlage (11) bevorzugt aus Cellulose, Polybutylenadipat-Terephthalat (BTA-Copolyester), Polylactid (PLA), insbesondere biaxial orientiertem Polylactid (z.B. BOPLA), Polyhydroxybutyrat (PHB), oder einem Gemisch daraus besteht.

4. Folie (1) nach Anspruch 3,
**dadurch gekennzeichnet,**
**dass** die Trägerlage (11) eine Bruchdehnung in Maschinenrichtung und/oder in Transversalrichtung von mindestens 70% aufweist, insbesondere bei einer Temperatur von 25°C.

5. Folie (1) nach einem der Ansprüche 3 oder 4,
**dadurch gekennzeichnet,**
**dass** die Trägerlage (11) einen Schmelzpunkt von mehr als 150°C, insbesondere von mehr als 220°C aufweist.

6. Folie (1) nach einem der Ansprüche 1 bis 5,
**dadurch gekennzeichnet,**
**dass** die Folie (1) bzw. die Transferlage (11) zumindest eine biologisch abbaubare Lackschicht (13) umfasst, wobei die Lackschicht (13) bevorzugt aus einem Lack auf Basis eines Polyzuckers (z.B. Zucker, Stärke, Cellulose), Lignin, Schellack, Baumharze (z.B. Kopal, Dammar), Polyvinylpyrrolidon (PVP), Polyalkohole (PVA) gebildet ist.

7. Folie (1) nach einem der Ansprüche 3 bis 6,
**dadurch gekennzeichnet,**
**dass** die Folie (1) zumindest eine biologisch abbaubare Ablöseschicht (12) umfasst, wobei die Ablöseschicht (12) bevorzugt aus einem Wachs, insbesondere Carnaubawachs, Montanwachs oder aus Methylcellulose gebildet ist.

8. Folie (1) nach einem der Ansprüche 1 bis 7,
**dadurch gekennzeichnet,**
**dass** die Folie (1) zumindest eine biologisch abbaubare Kleberschicht (14) umfasst, wobei die Kleberschicht (14) bevorzugt aus einem natürlichen Harz (z.B. Baumharze) und/oder aus Schellack gebildet ist.

9. Folie (1) nach einem der Ansprüche 1 bis 8,
**dadurch gekennzeichnet,**
**dass** die Folie (1) zumindest eine Metallschicht (15), insbesondere aus Aluminium, umfasst.

10. Folie (1) nach einem der Ansprüche 3 bis 9,
**dadurch gekennzeichnet,**
**dass** die Folie (1) eine auf der den weiteren Schichten abgewandten Oberfläche der Trägerlage (11) angeordnete Deckschicht (17), insbesondere aus gehärteten Ölen und/oder Fetten, bevorzugt aus Leinöl, Rapsöl und/oder Bienenwachs umfasst.

11. Folie (1) nach einem der Ansprüche 3 bis 5,
**dadurch gekennzeichnet,**
**dass** die Transferlage nicht biologisch abbaubar ist und die Transferlage bevorzugt eine Dekorschicht (16) umfasst, wobei die Dekorschicht (16) besonders bevorzugt eine Lackschicht, insbesondere aus Acrylat, Melamin, Aziridin, Polyurethan, Polyester, Polycarbonat, Nitrocellulose oder einem Gemisch aus diesen, mit zumindest einem Farbmittel, insbesondere bunte oder unbunte Pigmente und/oder Effektpigmente, Dünnschichtfilmsysteme, cholesterische Flüssigkristalle, Farbstoffe und/oder metallische oder nichtmetallische Nanopartikel umfasst.

12. Verfahren zum Dekorieren eines Gegenstands, insbesondere eines Kunststoffformkörpers, eines Papiers, eines Kartons oder dergleichen, bei welchem eine Folie (1) nach einem der Ansprüche 1 bis 11 unter Temperatureinwirkung auf den Gegenstand übertragen wird.

13. Verfahren nach Anspruch 12,
**dadurch gekennzeichnet,**
**dass** das Übertragen der Folie (1) durch Heißprägen, Laminieren, Insert Molding, In-Mold-Decoration oder die Three-Dimensional-Overlay-Methode erfolgt.

14. Dekorierter Gegenstand, insbesondere Kunststoffformkörper, Papier, Karton oder dergleichen, mit einer Folie (1) nach einem der Ansprüche 1 bis 11.

15. Verwendung einer Folie (1) nach einem der Ansprüche 1 bis 11 zum Dekorieren eines Kunststoffformteils, insbesondere eines Gehäuses für ein Gerät, eines Innenverkleidungsteils für ein Land-, Wasser- oder Luftfahrzeug, eines Bauteils für ein Möbelstück, einen Sportartikel, einen Bekleidungsartikel oder zum Dekorieren eines Papier- oder Kartongegenstands, insbesondere einer Verpackung oder als Sicherheitselement für ein Sicherheitsdokument, insbesondere ein Ausweisdokument, Visadokument, eine Kreditkarte, eine Debitkarte, ein Wertpapier, eine Mautvignette oder dergleichen.
